# FASCICULE DE BREVET EUROPEEN

(11) **EP 0 731 726 B1**
(45) Date de publication et mention de la délivrance du brevet: **27.01.1999**
(21) Numéro de dépôt: 95902817.6
(22) Date de dépôt: 30.11.1994
(51) Int. Cl.: B01D 53/70, B01D 53/86, A62D 3/00

(54) **PROCEDE D'EPURATION DE FUMEES CONTENANT DES POLLUANTS ORGANIQUES PEU SOLUBLES**
VERFAHREN ZUR REINIGUNG VON RAUCHGASEN, DIE SCHWERLÖSLICHE ORGANISCHE SCHADSTOFFE ENTHALTEN
METHOD FOR CLEANING GASES CONTAINING HARDLY SOLUBLE ORGANIC POLLUTANTS

(30) Priorité: 30.11.1993 FR 9314558
(43) Date de publication de la demande: 18.09.1996
(73) Titulaire: LAB S.A., 69003 Lyon (FR)
(72) Inventeur: VICARD, Jean-François, F-69002 Lyon (FR)
(74) Mandataire: Monnier, Guy
(86) Numéro de dépôt international: FR9401399
(87) Numéro de publication internationale: WO9515207

(56) Documents cités:
- EP-A- 0 017 796
- EP-A- 0 525 974
- WO-A-89/11329
- WO-A-92/19364
- DATABASE WPI Section Ch, Week 8013, Derwent Publications Ltd., London, GB; Class E36, AN 80-22866C & JP,A,55 022 320 (TOKYO SHIBAURA ELEC LTD) 18 Février 1980

## Description

### DOMAINE DE L'INVENTION

La présente invention se référe aux procédés d'épuration par voie humide des fumées contenant des polluants inorganiques peu solubles dans l'eau.

### ETAT DE L'ART

Dans les fumées de combustion, on constate la présence de polluants organiques particulaires et gazeux. Par ionisation de flamme on mesure le plus souvent des concentrations de carbone organique gazeux total dans la plage 1 à 10 mg/m³. Parmi ces polluants organiques, certains composés font l'objet d'investigations particulieres en raison de leur toxicité propre : c'est le cas des polychlorodibenzo-p-dioxines (PCDD) et polychlorodibenzofurannes (PCDF) pour lesquels il est nécessaire d'atteindre des teneurs résiduelles très basses.

Le plus souvent ces polluants organiques sont peu solubles dans l'eau ; c'est le cas des PCDD et PCDF. Ils ne peuvent alors pas être captés par simple lavage humide. Pour capter ces polluants, plusieurs techniques ont été proposées.

La première technique consiste à injecter dans les fumées une poudre de charbon actif ou de coke actif, à assurer un temps de contact suffisant entre la poudre et les fumées puis à séparer cette poudre comme les cendres volantes, dans un électrofiltre ou un filtre à manche. Cette méthode peut être utilement combinée avec une épuration sein-sèche ou une épuration sèche ; dans ce dernier cas on peut mélanger la poudre de charbon actif ou de coke actif avec la poudre de chaux éteinte avant injection dans les fumées. Cette première technique est toutefois limitée dans son application par plusieurs facteurs ; la température des fumées doit rester assez élevée pour éviter le colmatage et la corrosion par condensation, ce qui limite les possibilités d'absorption ; la présence d'autres polluants consomme le potentiel d'adsorption de la poudre de charbon actif ou du coke actif.

Pour éviter les inconvénients et limitations de cette première technique une deuxième technique a été proposée. Elle consiste à épurer les fumées tout d'abord jusqu'à des valeurs très basses pour les principaux polluants particulaires et gazeux puis à faire passer les fumées dans un filtre comportant plusieurs couches de charbon actif ou de coke actif en grain. Cette deuxième technique implique la réalisation d'installations complémentaires importantes et est, elle aussi, limitée dans son application par plusieurs facteurs ; la température des fumées ne doit pas être trop élevée en raison des risques d'inflammation de l'importante quantité de charbon actif ou de coke actif mise en oeuvre ; il est nécessaire de renouveler le charbon actif ou le coke actif assez souvent en raison de la présence d'autres polluants qui sont adsorbés et pour limiter les risques d'inflammation ; et enfin le charbon actif ou le coke actif, doit, après utilisation , être traité en raison de sa concentration en polluants.

Pour éviter ces inconvénients et limitation une troisième technique a été proposée. Elle consiste à épurer les fumées tout d'abord jusqu'à des valeurs très basses pour les principaux polluants particulaires et gazeux à l'exception des oxydes d'azote puis à faire passer les fumées dans un filtre constitué de catalyseurs identiques à ceux utilisés dans les procédés connus de réduction catalytique sélective des oxydes d'azote ; une injection de gaz NH₃ est faite pour la dite réduction sélective des oxydes d'azote, mais la quantité de catalyseurs est augmentée pour permettre l'adsorption et la destruction des dioxines et furannes ; une variante consiste à ajouter des catalyseurs spécifiquement conçus pour la destruction des dioxines et furannes. Cette troisième technique implique la réalisation d'installations complémentaires importantes et est, elle aussi limitée dans son application par plusieurs facteurs; la température des fumées doit rester assez élevée pour éviter l'empoisonnement des catalyseurs par condensation de sel restant gazeux si la température est assez élevée ; l'épuration préalable des fumées doit être poussée pour éviter l'empoisonnement des catalyseurs par des éléments spécifiques, arsenic par exemple ; enfin, si cette troisième technique a l'avantage de détruire les dioxines et furannes, il y a un risque de désorption avant destruction sous l'effet de tel ou tel facteur amont plus ou moins bien contrôlé. Par ailleurs les systèmes d'épuration conçus pour la séparation des autres polluants peuvent avoir un rôle - mal contrôlé - par rapport à ces polluants organiques ; dans les systèmes secs ou semi secs avec électrofiltre ou filtre à manche, il y a en général par réaction catalytique augmentation de polluants particuliers comme les dioxines et furannes ; dans les systèmes humides, suivant les cas, il peut y avoir augmentation ou diminution, sans toutefois obtenir systématiquement des teneurs résiduelles extrêmement basses.

La demande France 91-05853 (on WO 92/19364) décrit un procéde d'épuration par voie humide dans lequel le liquide de lavage comporte une phase solide finement divisée, par exemple du charbon actif. Ce procédé permet une diminution de la concentration en dioxines et furannes, mais peut être influencé par la présence d'autres polluants en particulier certains métaux qui peuvent, lorsque les conditions favorables sont réunies, provoquer une augmentation.

### SOMMAIRE DE L'INVENTION

La présente invention vise à supprimer ces inconvénients et limitations en concevant de manière judicieuse le procédé d'épuration) par voie humide pour assurer la captation des polluants organiques y compris les polluants peu solubles et pour assurer leur destruction. Pour cela les fumées sont épurées par un procédé humide qui assure suivant l'état de l'art tout d'abord la trempe des fumées qui provoque la condensation des polluants organiques condensables sur les particules de poussières présentes dans les fumées, puis la captation de ces particules par transfert dans le liquide de lavage. Parallèlement les polluants organiques non condensés sont dissous dans le liquide de lavage en fonction de leur solubilité. Le procédé humide d'épuration suivant l'invention, du genre conforme au préambule de la revendication 1, est caractérisé en ce que :
- on déconcentre le circuit de recyclage avec un dispositif assurant la déconcentration séparée en solide et en liquide,
- et on précipite sur le solide finement divisé, avant son introduction dans le liquide de recyclage, un ou plusieurs sels métalliques en réalisant dans un réacteur une suspension de solide finement divisé à laquelle est ajouté un sel métallique soluble approprié.

Des modes de réalisation préférés sont dèfinis dans les revendications 2 à 9.

### DESCRIPTION DETAILLEE DE L'INVENTION

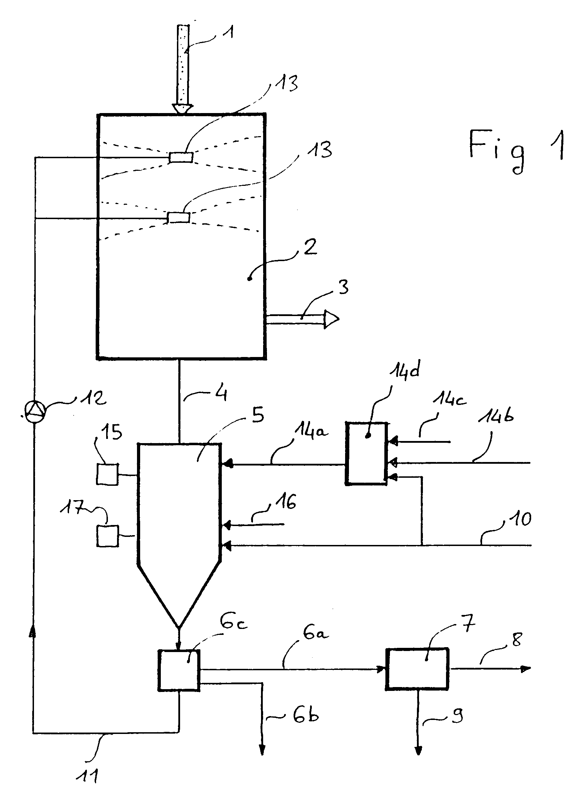

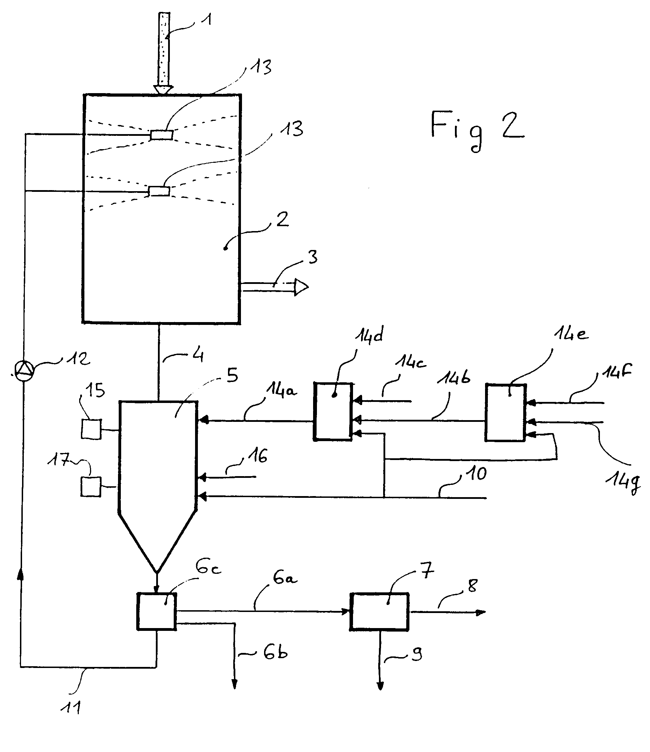

Une meilleure compréhension de l'invention peut être obtenue maintenant grâce a la description détaillée suivante et liaison avec les figures 1 et 2 qui donnent une représentation schématique du procédé objet de l'invention. Dans la figure 1 les fumées à épurer (1) sont épurées par un procédé humide qui assure suivant l'état de l'art la séparation des polluants gazeux et particulaires au niveau d'épuration recherché pour les fumées épurées (3). Un tel procédé humide est mis en oeuvre grâce à un laveur (2) où les fumées sont contactées par le liquide de lavage recyclé (11) envoyé par une pompe (12) dans les pulvérisateurs (13) répartissant le dit liquide de lavage recyclé dans les fumées. Le liquide de lavage recyclé (11) pulvérisé dans le laveur (2), après contact avec les fumées est récupéré (4) dans un bac (5) qui est souvent aménagé dans la base du laveur (2). Un dispositif de déconcentration (6c) assure une déconcentration d'une faible quantité du liquide de lavage récupéré (4) en solide en suspension (6b) sous forme de suspension concentrée et en liquide (6a) sous forme d'un liquide avec une faible concentration en matière en suspension et qui est envoyé à une station de traitement (7). Les polluants solubilisés sont précipités et séparés sous forme de résidu solide (9) tandis que l'eau claire (8) est rejetée dans le milieu naturel ou recyclée dans le bac (5). Un appoint d'eau (10) compense les consommations en particulier celles dues à l'evaporation dans le laveur (2). En général le contact entre les fumées et le liquide de lavage (11) amène ces fumées à des conditions proches de la saturation en vapeur d'eau : les fumées sont ainsi trempées et généralement leur température decroit rapidement Jusqu'à une température légèrement supérieure à la température humide des fumées à épurer (1). Il en résulte une condensation des polluants organiques condensables sur les particules de poussières présentes dans les fumées (1) ou sous forme de nouvelles particules fines ; le laveur (2) est dimensionné pour assurer la captation de ces particules pour atteindre le niveau d'épuration requis pour les fumées épurées (3). L'expérience montre que les particules captées par transfert dans le liquide de lavage restent dans le liquide lorsqu'il s'agit de polluants minéraux mais que pour de nombreux polluants organiques il y a une tendance au relargage dans les fumées épurées (3), ce relargage étant d'autant plus important que la concentration dans le liquide de lavage est élevée et que le polluant organique considéré est peu soluble. L'obtention de niveau d'épuration élevé impose en raison des polluants organiques peu solubles un débit très important de liquide de lavage (11) qu'il n'est pas possible pour des raisons techniques et économiques de traiter comme la déconcentration (6a). Suivant l'invention, une phase intermédiaire est constituée dans le liquide de lavage recyclé (11) en injectant un solide finement divisé par exemple dans le bac (5). Ce solide finement divisé peut être par exemple du charbon actif ou du coke actif en poudre. Pour déterminer la quantité de solide finement divisé (14a) à injecter on évalue (15) la teneur en polluants organiques dissous en mesurant par exemple la teneur en carbone organique total de la phase liquide. Cette évaluation peut être faite soit périodiquement et on règle manuellement a priori le taux d'injection en prenant une marge de sécurité raisonnable soit en continu et on règle automatiquement le taux d'injection. Toutefois il est aussi nécessaire de détruire les polluants organiques captés si l'on veut continuer à transférer dans le liquide de lavage les polluants organiques peu solubles. A cet effet une réaction de destruction de ces polluants organiques est mise en oeuvre dans le liquide de lavage lui-même, au niveau du solide finement divisé mis en suspension dans ce liquide. En général la réaction la plus appropriée est une réaction d'oxydation, par exemple avec de l'ozone ou de l'eau oxygénée H₂O₂, et qui peut bénéficier d'un effet catalytique du solide finement divisé et/ou de ses sites actifs. Pour déterminer la quantité du réactif (16) à injecter on évalue (17) sa teneur réelle dans le liquide ; par exemple dans le cas d'une réaction d'oxydation on mesurera l'oxygène dissous de la phase liquide. Cette évaluation peut être faite soit périodiquement et on règle manuellement a priori le taux d'injection en prenant une marge de sécurité raisonnable soit et continu et on règle automatiquement le taux d'injection. Dans le cas d'une réaction d'oxydation il peut être judicieux au lieu de consommer un réactif comme l'eau oxygénée d'utiliser l'oxygène dissous naturellement dans le liquide de lavage lors de son contact avec les fumées ; l'injection de réactif (16) est alors obtenue par celle dissolution et c'est le débit de liquide de lavage qui est alors réglé pour maintenir l'oxygène dissous réel au niveau requis. De la même manière dans le cas de fumées provenant de processus de combustion, il est possible de faire fonctionner ce processus de manière à ce que la phase intermédiaire soit constituée par les poussières émises et contenues alors dans les fumées (1) et particulier les imbrûlés. Il peut être aussi préférable d'un point de vue pratique d'injecter le solide finement divisé (14a) non pas dans le bac (5) mais dans les fumées à épurer (1), et amont du laveur (2).

Les quantités et nature de polluants organiques condensables variant d'un site d'application à l'autre, il est nécessaire pour chaque site de relier expérimentalement la teneur en polluants organiques dans les fumées épurées (3) aux évaluations (15) et (17).

Toutefois l'expérience montre de manière surprenante que les métaux dissous dans le liquide de lavage et provenant des polluants captés dans le laveur (2) peuvent influencer le processus décrit ci-dessus, certains métaux ayant un effet négatif comme le mercure et le cadmium, d'autres ayant un effet positif comme le plomb et le cuivre. C'est pourquoi suivant l'invention on obtient des sites actifs et précipitant sur le solide finement divisé, avant son introduction ou pendant son introduction dans le liquide de lavage un ou plusieurs sels métalliques choisis en fonction de l'objectif à atteindre. Pour cela on réalise dans le réacteur (14d) une suspension en introduisant le solide finement divisé (14b) et à laquelle est ajouté un sel métallique soluble approprié (14c). Le réacteur (14d) peut être intégré au bac de recyclage (5) et la dite précipitation est réalisée lors de l'introduction du solide finement divisé dans le liquide de lavage. Pour que le procédé reste efficace, on choisit des sels métalliques très peu solubles dans les conditions du réacteur (14d) et du liquide de lavage (11) recyclé dans le laveur (2). A cet égard les sulfures présentent l'avantage d'un très faible produit de solubilité pour la plupart des métaux, cette très faible solubilité étant conservée dans les conditions de pH généralement obtenues dans les laveurs épurant des fumées. Dans le cas où le solide finement divisé ne comporte pas assez de sulfure pour fixer sous forme très peu soluble des métaux, un composé approprié peut être incorporé dans ce solide lors de sa production. Une autre méthode d'usage plus général est représentée sur la figure 2 qui diffère de la figure 1 par les dispositions suivantes. Avant d'être introduit dans le réacteur (14d), le solide finement divisé est traité dans un réacteur (14e) qui reçoit le solide finement divisé brut (14g) et un sel (14f) capable de produire ultérieurement avec le sel métallique soluble (14c) un sel métallique très peu soluble dans les conditions du réacteur (14d) et du liquide de lavage (11) recyclé dans le laveur (2). Les sels (14f) peuvent être utilement choisis dans la famille sulfure de sodium, sulfure de potassium et les sels métalliques solubles (14c) peuvent être utilement choisis dans la famille chlorure de plomb, chlorure de cuivre. Le solide finement divisé peut être du genre charbon actif, coke actif. Il petit aussi être utilement choisi dans la famille des solides dont le composant principal est de l'oxyde de titane ou de l'alumine, ou de l'oxyde de fer, ou de la silice. Il est aussi possible de réutiliser le solide finement divisé contenu dans la déconcentration (6b) du circuit de recyclage du laveur (2) et l'introduisant en totalité ou en partie dans le réacteur (14e) ou (14d) en substitution des injections respectives de solide finement divisé brut (14g) ou (14b).

Un exemple montrera mieux l'intérêt de l'invention. Dans deux laveurs identiques fonctionnanten parallèle et au même débit de gaz (c'est-à-dire traitant la même quantité de fumées de même concentration en polluants) on a injecté les mêmes quantités de charbon actif en poudre (concentration 100 mg/l dans le liquide de lavage). Pour le laveur A la poudre de charbon actif, ayant une surface spécifique de 1000, avant été mise en contact dans un réacteur (14d) avec des sels métalliques de Cd et Hg (1 g de CdCl₂ et 1 g de HgCl₂ par litre de liquide et 100 mg/1 de charbon actif). De même pour le laveur B, une poudre de charbon actif identique avait été mise en contact dans un réacteur (14d) avec des sels métalliques de Pb et Cu) (1 g de PbCl₂ et 1 g de CuCl₂ par litre de liquide et 100 mg/l de charbon actif). On a obtenu les résultats suivants exprimés en ng TEQ/m³, les dioxines et furannes étant exprimés en équivalent toxiques (TEQ) :

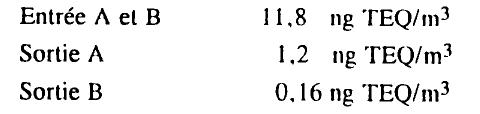

C'est-à-dire qu'avec des métaux à effets négatifs le rendement est limité à 90% tandis qu'avec des métaux à effets positifs le rendement, dans les mêmes conditions peut atteindre 99%, c'est-à-dire un changement d'un ordre de grandeur pour la teneur finale.

## Revendications

1. Procédé d'épuration des fumées par voie humide, dans lequel les fumées chargées en polluants sont épurées par un liquide de lavage (11) à l'intérieur d'un laveur (2) équipé d'un circuit de recyclage (4, 5, 11, 12) qui comporte d'une part un bac de recyclage pour récupérer le liquide de lavage à sa sortie du laveur, ledit bac de recyclage étant susceptible d'être aménagé dans la base dudit laveur, d'autre part une purge de déconcentration (6a et 6b) dudit circuit, lequel procédé, conformément auquel on introduit dans le liquide de lavage une phase solide finement divisée (14a) et on crée les conditions d'une reaction de destruction des polluants captés, est caractérisé en ce que :
- on déconcentre le circuit de recyclage avec un dispositif (6c) assurant la déconcentration séparée en solide (6b) et en liquide (6a),
- et on précipite sur le solide finement divisé, avant son introduction dans le liquide de recyclage, un ou plusieurs sels métalliques en réalisant dans un réacteur (14d) une suspension de solide finement divisé (14b) à laquelle est ajouté un sel métallique soluble approprié (14c)

2. Procédé suivant la revendication 1, caractérisé en ce que le réacteur (14d) est intégré au bac de recyclage (5).

3. Procédé suivant l'une quelconque des revendications 1 et 2, caractérisé en ce que le solide finement divisé (14b) est préalablement mis en suspension dans un réacteur (14e) avec un sel (14f) capable de produire avec le sel métallique soluble (14c) un sel métallique très peu soluble dans les conditions du réacteur (14d) et du liquide de lavage (11) recyclé dans le laveur (2).

4. Procédé suivant l'une quelconque des revendications 1 et 2, caractérisé en ce que le solide finement divisé est produit avant son utilisation en incorporant dans le mélange de matières premières utilisées pour le produire, un composé capable de réagir avec le sel métallique soluble (14c) pour donner un sel métallique très peu soluble dans les conditions du réacteur (14d) et du liquide de lavage (11) recyclé dans le laveur (2).

5. Procédé suivant l'une quelconque des revendications 1 à 4, caractérisé en ce que le solide finement divisé est du genre charbon actif ou coke actif.

6. Procédé suivant l'une quelconque des revendications 1 à 4, caractérisé en ce que le solide finement divisé est composé principalement d'un corps choisi dans la famille oxyde de titane, alumine, oxyde de fer, silice.

7. Procédé suivant l'une quelconque des revendications 1 à 6, caractérisé en ce que l'on injecte dans le liquide de lavage un réactif oxydant choisi dans la famille ozone, peroxyde d'hydrogène, oxygène.

8. Procédé suivant l'une quelconque des revendications 4 à 7, caractérisé en ce que le sel métallique soluble (14c) est choisi dans la famille sel soluble de cuivre, plomb, tandis que le sel (14f) est un sulfure soluble choisi dans la famille sodium ou potassium.

9. Procédé suivant l'une quelconque des revendications 1 à 8, caractérisé en ce que la déconcentration (6b) du circuit de recyclage en solide finement divisé est au moins partiellement réutilisée en substitution du solide finement divisé introduit dans le réacteur (14d) ou (14e).

## Claims

1. Process for washing fumes by the wet method, in which the fumes laden with pollutants are washed by a washing liquid (11) inside a washer (2) equipped with a recycling circuit (4, 5, 11, 12) which comprises, on the one hand, a recycling tank for recovering the washing liquid on leaving the washer, said recycling tank being capable of being arranged in the base of said washer, on the other hand, a deconcentration bleed (6a and 6b) of said circuit, which process, according to which a finely divided solid phase (14a) is introduced in the washing liquid and the conditions of a reaction of destruction of the collected pollutants are created, is characterized in that:
- the recycling circuit is deconcentrated with a device (6c) ensuring separate deconcentration as solid (6b) and as liquid (6c),
- and there are precipitated on the finely divided solid, before its introduction in the recycling liquid, one or more metal salts, producing in a reactor (14d) a suspension of finely divided solid (14b) to which is added an appropriate soluble metal salt (14c).

2. Process according to Claim 1, characterized in that the reactor (14d) is integrated in the recycling tank (5).

3. Process according to either one of Claims 1 and 2, characterized in that the finely divided solid (14b) is previously placed in suspension in a reactor (14e) with a salt (14f) capable of producing with the soluble metal salt (14c) a metal salt very sparingly soluble under the conditions of the reactor (14d) and the washing liquid (11) recycled in the washer (2).

4. Process according to either one of Claims 1 and 2, characterized in that the finely divided solid is produced before its use by incorporating in the mixture of raw materials used for producing it, a compound capable of reacting with the soluble metal salt (14c) to give a metal salt very sparingly soluble under the conditions of the reactor (14d) and the washing liquid (11) recycled in the washer (2).

5. Process according to any one of Claims 1 to 4, characterized in that the finely divided solid is of the active charcoal or active coke type.

6. Process according to any one of Claims 1 to 4, characterized in that the finely divided solid is principally composed of a body selected from the titanium oxide, alumina, iron oxide, silica family.

7. Process according to any one of Claims 1 to 6, characterized in that an oxidizing reagent chosen from the ozone, hydrogen peroxide, oxygen family, is injected in the washing liquid.

8. Process according to any one of Claims 4 to 7, characterized in that the soluble metal salt (14c) is selected from the soluble copper, lead salt family, while the salt (14f) is a soluble sulfide chosen from the sodium, potassium family.

9. Process according to any one of Claims 1 to 8, characterized in that the deconcentration (6b) of the recycling circuit as finely divided solid is wholly or partly reused as substitution of finely divided solid introduced in the reactor (14d) or(14e).

## Patentansprüche

1. Verfahren zur Reinigung der Rauchgase auf feuchtem Wege, bei dem die mit Schadstoffen angereicherten Rauchgase durch eine Waschflüssigkeit (11) im Inneren eines Reinigungsgerates (2) gereinigt werden, das mit einem Rezyklierkreis (4, 5, 11, 12) versehen ist, der einerseits einen Rezyklierbehälter für die Wiedergewinnung der Waschflüssigkeit am Ausgang des Reinigungsgerätes, wobei dieser Rezyklierbehälter in der Basis des Reinigungsgerätes angeordnet werden kann, und andererseits eine Dekonzentrationsreinigung (6a und 6b) des Kreises umfaßt, wobei dieses Verfahren, nachdem in die Waschflüssigkeit eine fein geteilte feste Phase (14a) eingeleitet wird und die Bedingungen für eine Reaktion zur Zerstörung der eingefangenen Schadstoffe geschaffen werden, dadurch gekennzeichnet ist, daß:
- der Rezyklierkreis mit einer Vorrichtung (6c) dekonzentriert wird, die die getrennte Dekonzentration in fest (6b) und flüssig (6a) gewährleistet,
- auf den fein geteilten Feststoff vor seiner Einleitung in die Rezyklierflüssigkeit ein oder mehrere Metallsalze niedergeschlagen werden, indem in einem Reaktor (14d) eine Suspension eines fein geteilten Feststoffes (14b) hergestellt wird, der ein geeignetes lösliches Metallsalz (14c) hinzugefügt wird.

2. Verfahren nach Anspruch 1, dadurch gekennzeichnet, daß der Reaktor (14d) in den Rezyklierbehälter (5) integriert ist.

3. Verfahren nach einem der Ansprüche 1 und 2, dadurch gekennzeichnet, daß der fein geteilte Feststoff (14b) vorher in einem Reaktor (14e) mit einem Salz (14f) aufgeschlämmt wird, das in der Lage ist, mit dem löslichen Metallsalz (14c) ein unter den Bedingungen des Reaktors sehr schwer lösliches Metallsalz und eine in dem Reinigungsbehälter (2) rezyklierte Waschflüssigkeit (11) zu erzeugen.

4. Verfahren nach einem der Ansprüche 1 und 2, dadurch gekennzeichnet, daß der fein geteilte Feststoff vor seiner Verwendung erzeugt wird, indem in das Gemisch aus Ausgangsstoffen, die für seine Herstellung verwendet werden, eine Verbindung eingeleitet wird, die in der Lage ist, mit dem löslichen Metallsalz (14c) zu reagieren, um ein unter den Bedingungen des Reaktors (14d) schwer lösliches Metallsalz und eine in dem Reinigungsgerät (2) rezyklierte Waschflüssigkeit (11) zu bilden.

5. Verfahren nach einem der Ansprüche 1 bis 4, dadurch gekennzeichnet, daß der fein geteilte Feststoff von der Art Aktivkohle oder Aktivkoks ist.

6. Verfahren nach einem der Ansprüche 1 bis 4, dadurch gekennzeichnet, daß der fein geteilte Feststoff hauptsächlich von einem Körper gebildet wird, der in der Familie Titanoxid, Alumin, Eisenoxid, Silicium ausgewählt wird.

7. Verfahren nach einem der Ansprüche 1 bis 6, dadurch gekennzeichnet, daß in die Waschflüssigkeit ein oxydierendes Reagens eingespritzt wird, das in der Familie Ozon, Wasserstoffperoxid, Sauerstoff ausgewählt wird.

8. Verfahren nach einem der Ansprüche 4 bis 7, dadurch gekennzeichnet daß das lösliche Metallsalz (14c) in der Familie lösliches Kupfer-, Bleisalz ausgewählt wird, während das Salz (14f) ein lösliches Sulfid ist, das in der Familie Natrium oder Kalium ausgewählt wird.

9. Verfahren nach einem der Ansprüche 1 bis 8, dadurch gekennzeichnet, daß die Dekonzentration (6b) des Rezyklierkreises in einen fein geteilten Feststoff zumindest teilweise als Ersatz für den in den Reaktor (14d) oder (14e) eingeleiteten fein geteilten Feststoff wiederverwendet wird.
